# DEMANDE DE BREVET EUROPEEN

(11) **EP 4 554 187 A1**
(43) Date de publication de la demande: **14.05.2025**
(21) Numéro de dépôt: 24211472.6
(22) Date de dépôt: 07.11.2024
(51) Int. Cl.: H04L 67/02, H04L 67/04

(54) **TÉLÉCHARGEMENT D'UNE PAGE WEB OPTIMISÉ POUR DES PICS DE TRAFIC ÉVÉNEMENTIELS**

(30) Priorité: 09.11.2023 FR 2312251
(71) Demandeur: Orange, 92130 Issy-les-Moulineaux (FR)
(72) Inventeur: MARCHAND, Hervé, 92326 CHATILLON CEDEX (FR); GASTE, Olivier, 92326 CHATILLON CEDEX (FR)
(74) Mandataire: Regimbeau

(57) **Abrégé**

Procédé d'accès par un client (C) à un service web déployé sur un serveur (S) à travers un réseau de télécommunication (N), ledit procédé comportant
réception (S1) d'une requête désignant une page référençant un ensemble d'éléments dits dynamiques, certains au moins desdits éléments dynamiques correspondant à des contenus audio-vidéo,
détermination (S2) d'un pic de trafic associé à au moins un contenu audio-vidéo,
émission (S3) vers ledit client d'une page spécifique liée audit au moins un contenu audio-vidéo, en réponse à ladite requête.

## Description

### DOMAINE TECHNIQUE

La présente invention est relative au téléchargement depuis un serveur vers un client de télécommunication d'une page web référençant un ensemble d'éléments devant être dynamiquement déterminés. Elle s'applique particulièrement aux pages web d'applications web pouvant faire face à des pics de trafic importants, telles que les applications de type « web TV ».

Une application de type Web TV vise à offrir les services habituels d'une télévision connectée depuis un navigateur pouvant se connecter à un site web. Un utilisateur d'un ordinateur ou de tout dispositif de télécommunication (de type tablette numérique, smartphone, etc.) peut ainsi se connecter à l'application « web TV » et visualiser un programme audio ou audio-vidéo choisi via son navigateur.

Les applications de type « web TV » visent ainsi à offrir un bouquet de contenus audio et/ou vidéo à des utilisateurs, ces contenus pouvant être diffusés en direct (ou « live streaming » en anglais) ou en différé sous la forme de vidéos à la demande.

Une telle application peut agréger des contenus de sources différentes.

L'offre de contenus peut varier au cours du temps, notamment du fait que par nature les contenus audio-vidéos sont liés à l'actualité, mais aussi parce que les fournisseurs de contenu peuvent faire évoluer leur offre de façon régulière pour des raisons marketing.

Également, l'offre de contenus peut varier en fonction des utilisateurs. Ceux-ci peuvent être enregistrés auprès de l'application et avoir accès à des contenus qui peut ainsi dépendre de leur profil, y compris de chaînes ou bouquets auxquels ils ont souscrit.

Il apparait donc que l'application ne peut pas présenter une page web statique, tout du moins comme page d'accueil, mais une page dynamiquement construite en fonction de l'instant auquel la requête est reçue et de l'utilisateur dont cette requête émane.

La page web est alors typiquement constituée d'une trame statique minimale et de références à des éléments qui sont dynamiquement incorporés à la page, afin de construire cette page web à la demande afin qu'elle puisse être produite sur l'interface homme-machine du navigateur de l'utilisateur.

Ces éléments peuvent notamment être déterminés par du code informatique (typiquement en langage Javascript) incorporé ou référencé dans la trame de la page web. Ce code informatique est prévu pour récupérer les éléments dynamiques dans des bases de données en fonction par exemple de paramètres contextuels (identifiant de l'utilisateur, heure courante, etc.) et de la logique implémentée par le code informatique.

Lorsqu'il reçoit une requête d'un client d'un utilisateur (terminal de télécommunication, ordinateur... hébergeant un navigateur web), le serveur hébergeant l'application web peut renvoyer la trame de page web, charge au client d'exécuter le code informatique et de déterminer puis télécharger les différents éléments constitutifs de la page web, afin de la produire sur l'écran du terminal.

Toutefois, une application de type « web TV » peut avoir une vocation commerciale et donc obtenir une visibilité le plus importante possible sur le Web. Cette visibilité passe par de bons référencements auprès des différents moteurs de recherche.

Dès lors le serveur hébergeant l'application web ne peut pas renvoyer seulement cette trame de page web et le code informatique car ils ne seraient pas correctement traités par les moteurs de recherche. Notamment, ceux-ci ne sont pas adaptés pour exécuter le code informatique et ne pourraient donc pas récupérer les différents éléments constitutifs de la page web. Dès lors, les moteurs de recherche ne pourraient pas prendre en compte le contenu de ces pages et donc ne pourraient pas les référencer correctement.

La page web doit donc être construire par le serveur et transmise aux clients, une fois construite, c'est-à-dire après intégration des différents éléments constitutifs, dynamiquement déterminés.

Ce type de fonctionnement est généralement appelé SSR pour « Server Side Rendering » en anglais (« rendu côté serveur » en français).

Il s'agit d'une technique utilisée dans le développement web qui consiste à employer des scripts sur un serveur web qui produit une réponse personnalisée pour chaque demande de l'utilisateur (client) sur le site web. Les scripts peuvent être écrits dans l'un des langages de script côté serveur disponibles (comme Javascript, PHP, Python...). Le SSR se distingue du rendu côté client, dans lesquels des scripts intégrés sont exécutés côté client dans un navigateur web, mais les deux techniques sont souvent utilisées conjointement. L'alternative à l'un ou l'autre type de script, ou aux deux, est que le serveur web lui-même fournisse une page web statique.

Cette technique fait donc reposer une charge importante sur le serveur qui doit être à même de construire les pages web à la volée pour chaque requête reçue d'un utilisateur. Classiquement, les serveurs sont dimensionnés pour faire face à la charge induite par ce fonctionnement. Toutefois, dans le contexte d'une application de type Web TV, ainsi que précédemment expliqué, le serveur doit faire face à une forte variabilité du nombre de requêtes au cours du temps et à des pics extrêmement importants.

Par exemple, avant un événement d'importance (discours du Président de le République, début d'un match d'une compétition sportive, annonce d'une catastrophe...), le serveur peut recevoir un nombre de requêtes plusieurs dizaines de fois plus élevé que le régime nominal (quelques minutes avant).

Dimensionner le serveur sur la base de ces pics de charge serait théoriquement possible, mais nécessiterait d'une part de prévoir l'intensité maximale de ces pics, et en outre de disposer de ressources beaucoup trop importantes pour le régime nominal. Dans la mesure où ces pics de charge peuvent être relativement exceptionnels ou en tout cas peu fréquent, ce surdimensionnement serait non optimal en termes de coûts pour l'exploitant du serveur et préjudiciable en termes écologiques.

Il existe donc un besoin d'améliorer les propositions actuelles de l'état de la technique.

### EXPOSÉ DE L'INVENTION

L'invention vise à gérer de façon efficace les pics de trafic sur les serveurs déployant des applications web, notamment de type « web TV », ayant une contrainte de référencement, et en évitant de surdimensionner les serveurs.

À ces fins, selon un premier aspect, la présente invention peut être mise en oeuvre par un procédé d'accès par un client à un service web déployé sur un serveur à travers un réseau de télécommunication, ledit procédé comportant
- réception d'une requête désignant une page référençant un ensemble d'éléments dits dynamiques certains au moins desdits éléments dynamiques correspondant à des contenus audio-vidéo,
- détermination d'un pic de trafic associé à au moins un contenu audio-vidéo,
- émission vers ledit client d'une page spécifique liée audit au moins un contenu audio-vidéo, en réponse à ladite requête.

Ainsi, le travail computationnel que doit déployer le serveur pour transmettre une page requise peut être dynamiquement adapté au trafic sur le serveur, en délestant les requêtes vers une page spécifique moins exigeante en termes de charge computationnelle.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite page spécifique est adaptée pour référencer ledit au moins un contenu audio-vidéo, et, éventuellement, ladite page demandée. Ainsi, l'utilisateur n'a besoin que d'une action pour déclencher le téléchargement du contenu associé au pic de trafic, et dont il est statistiquement le plus intéressé.
- ladite page spécifique est une page statique ne comportant aucun élément dynamique. Ainsi, le travail computationnel nécessaire pour le serveur est réduit au minimum, ce qui lui permet de faire face au pic de trafic à ressource maîtrisée (CPU et mémoire).
- ladite détermination comprend une surveillance des trafics associés à un ensemble de contenus audio-vidéo, et une détection d'un pic de trafic parmi lesdits trafics. Le serveur peut ainsi s'adapter de façon dynamique aux fluctuations de la charge et réagir dès l'apparition d'un pic de trafic.
- ladite détection est basée sur une comparaison desdites trafics à un seuil déterminé.
- des traitements correspondant à ladite détermination d'un pic de trafic sont déclenchés préalablement à ladite réception de ladite requête. On peut ainsi mutualiser la détermination du pic pour plusieurs requêtes.

Un autre aspect de l'invention concerne un serveur accessible à un client à travers un réseau de télécommunication, comportant au moins un processeur adapté pour mettre en oeuvre :
- une réception d'une requête désignant une page référençant un ensemble d'éléments dits dynamiques, certains au moins desdits éléments dynamiques correspondant à des contenus audio-vidéo,
- une détermination d'un pic de trafic associé à au moins un contenu audio-vidéo,
- une émission vers ledit client d'une page spécifique liée audit au moins un contenu audio-vidéo, en réponse à ladite requête.

Un autre aspect de l'invention concerne un programme d'ordinateur apte à être mis en oeuvre sur un serveur web, le programme comprenant des instructions de code qui, lorsqu'il est exécuté par un processeur, réalise les étapes du procédé tel que précédemment défini.

Un autre aspect de l'invention concerne un support de données sur lequel a été mémorisé au moins une série d'instructions de code de programme pour l'exécution d'un procédé tel que précédemment défini.

D'autres caractéristiques et avantages de l'invention apparaîtront à la lecture de la description qui suit d'un mode de réalisation préféré de l'invention, donnée à titre d'exemple et en référence aux dessins annexés.

### BRÈVE DESCRIPTION DES DESSINS

- la figure 1 illustre un contexte de mise en oeuvre d'un procédé et d'un serveur, selon des modes de réalisation de l'invention,
- la figure 2 illustre un exemple d'interface graphique pouvant être affiché par un écran associé à un client, correspondant à une page demandée, selon un mode de réalisation de l'invention,
- la figure 3 schématise un chronogramme selon un mode de réalisation de l'invention,
- la figure 4 illustre un exemple d'interface graphique pouvant être affiché par un écran associé à un client, correspondant à une page spécifique, selon un mode de réalisation de l'invention.

### EXPOSÉ DÉTAILLÉ DE MODES DE RÉALISATION PARTICULIERS

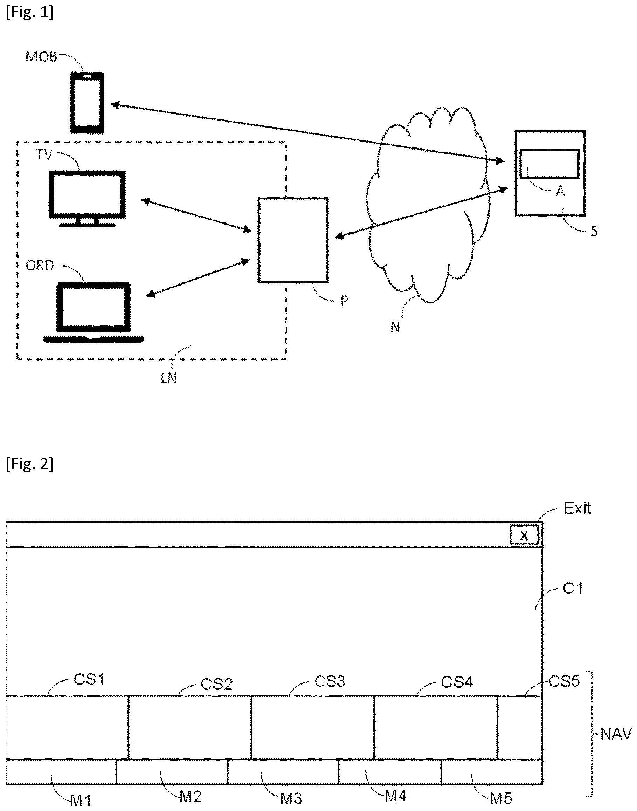

La **figure 1** illustre un contexte de mise en oeuvre d'un serveur S pouvant héberger une application web A.

Ce serveur S est accessible à des clients à travers un réseau de télécommunication N.

Ce réseau de télécommunication peut typiquement être composé de plusieurs réseaux interconnectés, notamment un réseau d'accès permettant aux clients de se connecter à un réseau principal (lui-même constitué d'une interconnexion de sous-réseaux) ou « backbone » en anglais.

Les clients peuvent être localement connectés à un réseau local, LN, par exemple un réseau local sans fil, leur permettant d'accéder à une passerelle P vers le réseau d'accès. Ce réseau local sans fil, communément appelé WLAN pour « *Wireless Local Area Network* » en anglais peut être conforme aux protocoles Wi-Fi, ou wifi, tels que spécifiés dans les documents normatifs de l'IEEE de la famille 802.11 (ou ISO/CEI 8802-11).

Le client peut accéder également directement au réseau d'accès, par exemple à un réseau cellulaire de troisième, quatrième, cinquième génération (3G/4G/5G) par exemple.

Les clients peuvent être de différentes natures, leur commun étant de disposer de moyens permettant la connexion au réseau. Il s'agit essentiellement de composants de radiocommunication et de composants électroniques et informatiques permettant la mise en oeuvre des piles protocolaires nécessaires à la gestion des protocoles associés au réseau et à la réception et à l'émission de paquets de données.

Sur la figure 1, trois types de clients sont représentés : un ordinateur ORD, un terminal mobile de communication, MOB, et un téléviseur connecté TV.

Le terminal mobile MOB est typiquement un téléphone intelligent de type « smartphone » ou une tablette numérique.... L'ordinateur peut être un ordinateur fixe (ou « *desktop* » selon le vocabulaire en langue anglaise) ou portable (ou « *laptop* »)*.*

Le téléviseur TV peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans l'exemple illustratif de la figure 1, les clients ORD et TV peuvent accéder à l'application Web A via le réseau local LN et la passerelle P. Le client MOB accède à l'application web A directement à travers le réseau de télécommunication N. Ces deux types d'accès sont illustratifs et visent essentiellement à montrer la diversité des connexions possibles entre un client et l'application web A.

Les clients disposent d'outils logiciels adaptés pour permettre à l'utilisateur de se connecter à une application web et à visualiser un contenu transmis depuis cet application web. En particulier, dans le cas d'une application web de type « Web TV », l'outil logiciel (communément appelé « navigateur » ou « *web browser* » en anglais) est adapté pour permettre la production d'un contenu audio ou audio-vidéo sur une interface homme-machine associée au client (écran du client, écran externe connecté au client, etc.)

Les contenus audio ou audio-vidéos comprennent des contenus diffusés en direct qui peuvent être liés à des chaînes de télévision, de radiodiffusion, etc. Il peut également s'agir de contenu à la demande (podcast, vidéo à la demande, VoD (« *video on demand* ») etc.).

L'application web A est prévue pour fournir, sur requête des clients, des pages web référençant différents éléments.

Ces éléments peuvent correspondre à des zones de la page web, dont le contenu peut être individuellement déterminé. Par exemple, dans le cas d'une application de type « web TV », les éléments peuvent correspondre à des chaînes, à des contenus vidéos particuliers, à des menus, à des espaces publicitaires, etc.

Les éléments peuvent être associés à la fois à une représentation visuelle ou graphique, et à un comportement, notamment lorsqu'il est pointé ou sélectionné par l'utilisateur.

Par exemple, un contenu vidéo peut être mis en surbrillance ou être animé différemment, lorsque l'utilisateur le pointe (par exemple au moyen d'une souris, ou d'une télécommande), et être déclenché en plein écran lorsqu'il est sélectionné.

La sélection d'autres éléments peut entraîner d'autres actions, comme par exemple l'ouverture d'une nouvelle page web.

En particulier, la première page, ou page d'accueil, peut être ainsi dynamiquement déterminée. L'application web peut également contenir des pages dynamiquement déterminées et des pages statiques (code HTML pur). Certaines pages peuvent également être un mix des deux, c'est-à-dire comporter des éléments statiques et des éléments à déterminer dynamiquement.

La **figure 2** illustre un exemple d'interface graphique pouvant être affiché par un écran associé à un client. Cette page d'exemple peut être une page d'accueil.

Cette interface graphique peut afficher, de façon concomitante, un contenu, ou flux, vidéo dans une zone C1, et une zone de navigation NAV permettant des interactions avec l'utilisateur du terminal et permettant notamment de changer le flux vidéo à afficher dans la zone C1.

La zone de navigation NAV comporte un ensemble de zones CS1, CS2, CS3, CS4, CS5 destinées à l'affichage de flux, ou contenus, vidéos secondaires. Ces contenus secondaires peuvent par exemple correspondre à d'autres chaînes de télévision.

La sélection d'une zone secondaire peut déclencher l'affichage du contenu vidéo secondaire dans la zone principale C1. Le contenu précédemment affiché dans cette zone principale C1 peut alors être affiché dans une zone secondaire. L'utilisateur peut ainsi zapper d'un contenu vidéo à un autre vidéo au moyen de cette interface graphique.

La zone de navigation peut également comporter des menus M1, M2, M3, M4, M5, permettant d'autres options de navigation, par exemple de changer de source de contenu multimédia : il peut par exemple s'agir de se connecter à un autre serveur de contenu SC, de récupérer des contenus multimédias stockés localement, etc.

L'interface graphique peut comporter d'autres éléments non représentés sur la figure : menus, déroulants ou autres, accessibles par exemple au moyen de la sélection d'un menu M1, M2, ML3, M4, M5, ou d'une touche d'une télécommande associée au terminal 10, etc. Ces éléments peuvent permettre d'accéder à encore d'autres options, par exemple à l'ensemble des chaînes de télévision disponible.

Comme précisé précédemment, des éléments de cette page peuvent être dynamiquement déterminés afin de refléter les différents contenus, notamment audio-vidéos, disponibles et accessibles à l'utilisateur en fonction de son profil et du temps actuel. La page web référence donc ces éléments qui doivent être déterminés dynamiquement, et que l'on appellera par la suite « éléments dynamiques ».

La page web peut par ailleurs comporter des éléments statiques, c'est-à-dire ne devant pas être dynamiquement déterminés. Ces éléments statiques ne dépendent pas de l'actualité ou de l'utilisateur : il peut s'agir d'informations générales, d'éléments graphiques de la page web toujours présents, de la feuille de style CSS, etc.

Selon un mode de réalisation, la page web peut être un canevas, ou une trame, comportant très peu d'éléments statiques et majoritairement constitué d'éléments devant être déterminés de façon dynamique (éléments dynamiques).

Le référencement d'éléments dans une page web peut être effectuée par tout moyen connu. Il s'agit typiquement de balises ou de mots-clés du langage HTML (« *HyperText Markup Language* » en anglais).

En particulier, le référencement d'un élément devant être dynamiquement déterminé peut se faire par des moyens techniques permettant de déclencher automatiquement cette détermination. Ces moyens techniques peuvent être des liens vers des ressources contenant du code informatique.

Ce code informatique peut être des scripts écrits dans l'un des langages de script côté serveur disponibles (comme Javascript, PHP, Python...).

Il est prévu pour récupérer les éléments dynamiques dans des bases de données en fonction par exemple de paramètres contextuels (identifiant de l'utilisateur, heure courante, etc.) et de la logique implémentée par le code informatique. En particulier, il peut être prévu pour récupérer les visuels d'une émission vidéo, d'une chaîne de télévision, d'un menu, ainsi que les actions associées (permettant notamment le déclenche du téléchargement du contenu multimédia associé depuis un serveur de contenu).

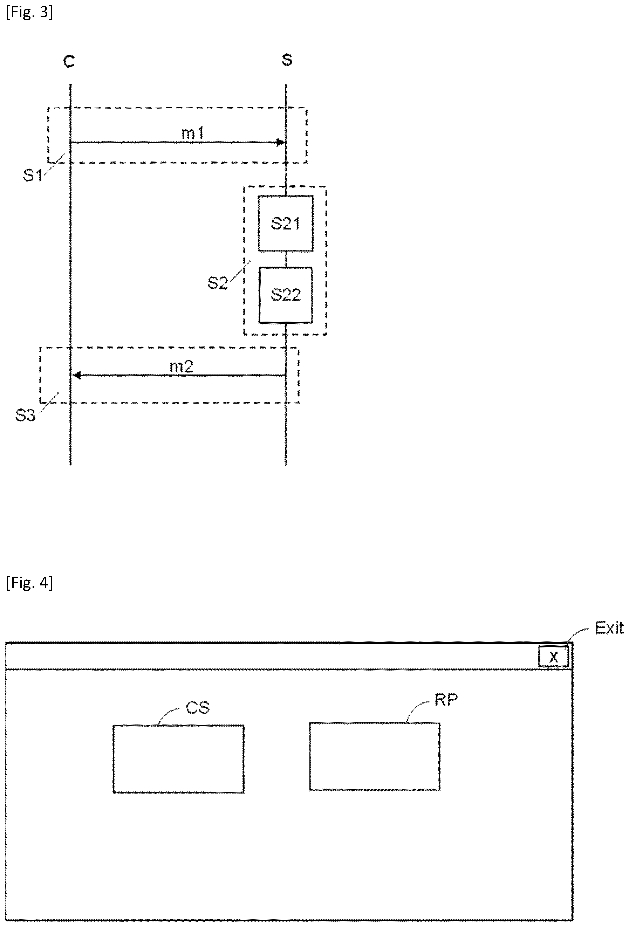

La **figure 3** schématise un chronogramme selon un mode de réalisation de l'invention.

Dans une étape S1, le client C transmet une requête m1 au serveur S. Cette requête désigne une page demandée, disponible sur ce serveur. Cette page peut par exemple être la page d'accueil. Celle-ci peut être désignée par l'URL (pour « Unified Resource Locator » en anglais, ou localisateur de ressource unifié) du serveur S, ou tout autre adresse précédemment provisionnée sur le client.

La requête peut être conforme au protocole HTTP (pour « HyperText Transfer Protocol » en anglais).

Il peut notamment s'agir d'une requête GET de ce protocole HTTP.

Dans une étape S2, le serveur S peut déterminer s'il existe un pic de trafic associé à un ou plusieurs contenus audio-vidéo référencé(s) dans la page demandée.

Cette détermination peut notamment comprendre deux sous-étapes :
une surveillance, S21, des trafics associés à un ensemble de contenus audio-vidéo, parmi ceux référencés dans la page demandée (par la requête m1), et
une détection, S22, d'un pic de trafic parmi ces trafics.

Le serveur S peut donc mettre en place un mécanisme de surveillance pour comptabiliser le nombre de clients requérant les contenus référencés dans la page demandée.

Le trafic peut ainsi être calculé ou estimé, par exemple en nombre de requêtes par unité de temps.

Les trafics des différents contenus référencés (ou d'une sous-partie) peuvent être comparés à un seuil déterminé.

Ce seuil peut être déterminé afin de permettre la détection des pics de trafic susceptibles d'impacter la capacité du serveur à pouvoir traiter les requêtes m1 des clients afin de déterminer les éléments dynamiques référencés dans les pages demandées.

Concrètement, ce seuil peut être dimensionné afin de discriminer des trafics normaux sur un serveur de contenus et des trafics exceptionnels pour lesquels le serveur n'est normalement pas dimensionné (son dimensionnement serait, comme précédemment expliqué, un surdimensionnement présentant de nombreux inconvénients en termes de coûts et d'impact écologique).

A titre d'exemple, la période correspondant au début d'une compétition sportive importante, d'un discours d'un président de la République, de l'annonce d'une catastrophe, etc. peuvent être des événements susceptibles d'engendrer un pic de trafic pour le contenu audio-visuel correspondant.

En général, un seul contenu audio-vidéo génère un pic de trafic à un moment donné, mais il peut arriver que plusieurs contenus connaissent un pic de trafic dans une même fenêtre temporelle. Cela peut notamment être le cas si un même événement est diffusé par plusieurs chaînes de télévision.

Le trafic peut être périodiquement surveillé, S21, par exemple à intervalle régulier. Lors de la réception d'une requête, la dernière mesure ou estimation en date est alors prise en compte. Selon un autre mode de réalisation, le trafic du serveur S est mesure ou estimé à la réception d'une requête m1 (par exemple par une analyse d'un fichier de journalisation, ou « log »).

Autrement dit, des traitements, correspondant aux étapes S21 et S22, peuvent être déployés avant la réception d'une requête, m1. Le traitement déployé à la réception de cette requête consiste à vérifier un état du serveur, tel que précédemment déterminé, c'est-à-dire qu'il existe actuellement un pic de trafic.

Dans une étape S3, dans le cas où un pic de trafic est détecté pour au moins un contenu, le serveur S émets, m2, vers le client C une page spécifique, en réponse à la requête m1 reçue de ce client. Cette page spécifique est transmise à la place de la page demandée par ce client, et est liée au(x) contenu(s) associé(s) au(x) pic(s) de trafic détecté(s).

Cette page spécifique vise à éviter au serveur de devoir déterminer les différents éléments dynamiques référencés dans la page demandée. Elle vise donc à éviter une tâche computationnelle importante pour le serveur qui, comme on a vu, peut poser des problèmes lors d'un pic de trafic qui engendre une charge importante pour le serveur de contenu.

Aussi, selon un mode de réalisation, cette page spécifique peut être une page statique, qui ne comporte donc aucun élément dynamique. Cette page statique requiert un minimum de traitement pour le serveur.

Dans un tel mode de réalisation, la page statique peut être construite indépendamment des requêtes, par exemple lors de la détection d'un pic de trafic. Cette page est alors stockée sur le serveur S et transmise aux clients qui émettent une requête vers une page référençant le contenu correspondant à ce pic de trafic.

La page spécifique peut être adaptée pour référencer le (ou les) contenus audio-vidéo et éventuellement la page demandée lors de la requête m1.

Cette page spécifique peut être assez minimaliste et, par exemple, proposer ces deux seules options. La page est alors prévue pour permettre à l'utilisateur du client C de soit accéder au contenu associé au pic de trafic, puisque, statistiquement, la probabilité qu'il soit intéressé par ce contenu est très élevée, soit d'accéder à la page demandée.

Avec une probabilité élevée (fonction, statistiquement, de l'importance du pic de trafic), le client C ne sélectionnera pas l'accès à la page initialement demandée. Ainsi, la tâche correspondante de détermination des éléments dynamiques référencés dans cette page ne sera pas déclenchée. Il en résulte une économie de ressources, côté serveur, qui est d'autant plus importante que le pic de trafic est élevé.

La **figure 4** illustre une page spécifique telle qu'elle peut être produite sur une interface homme-machine d'un client C.

Cette page comporte un élément CS correspondant au contenu associé au pic de trafic. Cet élément peut être un simple texte, ou une image représentative du contenu.

La page peut également comporter un élément RP correspondant à la page demandée. Cet élément peut également être un simple texte, ou une image représentative de la page demandée. Si la page demandée est la page d'accueil, il peut s'agir d'une vue statique de cette page d'accueil, par exemple.

Les éléments comportent également des liens qui, lorsqu'activé par l'utilisateur du client C, déclenche l'accès à la ressource correspondante : contenu audio-vidéo (élément CS) ou téléchargement de la page demandée (élément RP).

Selon un mode de réalisation, tout comme le message de requête m1, ce message de réponse m2 contenant la page spécifique peut être conforme au protocole HTTP. Conformément au protocole, un ensemble de messages m2 peut être transmis afin de transmettre les différents éléments constitutifs de la page web.

Ainsi, en dehors de tout pic de trafic, le comportement du serveur S est inchangé et demeure le fonctionnement nominal.

Lorsqu'apparaît un pic de trafic, son comportement est modifié et peut entrer dans un fonctionnement que l'on peut considérer dégradé afin de pouvoir faire face au trafic et à la montée en charge. Cette dégradation de la qualité de service est toutefois balancée par les avantages en termes de dimensionnement du serveur, et donc de coût et de coût écologique.

Lors d'un pic de trafic, il est possible qu'un moteur de recherche récupère une page web spécifique. Dans ce cas-là, il ne pourra correctement référencer la page web. Toutefois, la probabilité qu'un moteur de recherche adresse une requête vers le serveur lors d'un pic d'activité de celui-ci est relativement faible. En outre, les moteurs de recherche adressent des requêtes de façon régulière vers une même page, de sorte que l'impact d'un mauvais référencement sur une requête est minimisé sur un ensemble de requêtes.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé d'accès par un client (C) à un service web déployé sur un serveur (S) à travers un réseau de télécommunication (N), ledit procédé comportant
réception (S1) d'une requête désignant une page référençant un ensemble d'éléments dits dynamiques, certains au moins desdits éléments dynamiques correspondant à des contenus audio-vidéo,
détermination (S2) d'un pic de trafic associé à au moins un contenu audio-vidéo, émission (S3) vers ledit client d'une page spécifique liée audit au moins un contenu audio-vidéo, en réponse à ladite requête.

2. Procédé selon la revendication précédente, dans lequel ladite page spécifique est adaptée pour référencer ledit au moins un contenu audio-vidéo, et, éventuellement, ladite page demandée.

3. Procédé selon l'une des revendications précédentes dans lequel ladite page spécifique est une page statique ne comportant aucun élément dynamique.

4. Procédé selon l'une des revendications précédentes, dans lequel ladite détermination (S2) comprend une surveillance (S21) des trafics associés à un ensemble de contenus audio-vidéo, et une détection (S22) d'un pic de trafic parmi lesdits trafics.

5. Procédé selon la revendication précédente, dans lequel ladite détection (S22) est basée sur une comparaison desdites trafics à un seuil déterminé.

6. Procédé selon l'une des revendications précédentes, dans lequel des traitements correspondant à ladite détermination (S2) d'un pic de trafic sont déclenchés préalablement à ladite réception (S1) de ladite requête (m1).

7. Serveur (S) accessible à un client (C) à travers un réseau de télécommunication, comportant au moins un processeur adapté pour mettre en oeuvre :
une réception (S1) d'une requête désignant une page référençant un ensemble d'éléments dits dynamiques certains au moins desdits éléments dynamiques correspondant à des contenus audio-vidéo,
une détermination (S2) d'un pic de trafic associé à au moins un contenu audio-vidéo,
une émission (S3) vers ledit client d'une page spécifique liée audit au moins un contenu audio-vidéo, en réponse à ladite requête.

8. Programme d'ordinateur apte à être mis en oeuvre sur un serveur (S), le programme comprenant des instructions de code qui, lorsqu'il est exécuté par un processeur, réalise les étapes du procédé définie dans les revendications 1 à 6.

9. Support de données sur lequel a été mémorisé au moins une série d'instructions de code de programme pour l'exécution d'un procédé selon l'une des revendications 1 à 6.
